# EUROPEAN PATENT APPLICATION

(11) **EP 2 557 777 A1**
(43) Date of publication of application: **13.02.2013**
(21) Application number: 12162730.1
(22) Date of filing: 30.03.2012
(51) Int. Cl.: H04N 5/76, H04N 5/765, H04N 5/781, H04N 5/907

(54) **Image processing apparatus and image processing method for sequentially storing data based on a time shift**

(30) Priority: 10.08.2011 KR 20110079779
(71) Applicant: Samsung Electronics Co., Ltd., Suwon-si, Gyeonggi-do, 443-742 (KR)
(72) Inventor: SON, Ho-shin, Gyeonggi-do (KR)
(74) Representative: Hancox, Jonathan Christopher

(57) **Abstract**

An image processing apparatus and an image processing method are provided. The image processing apparatus 100 includes a reception unit 110 which receives broadcast data; a storage unit 120 which, in response to a time shift function being turned on, sequentially stores broadcast data received via the reception unit 110; and a control unit 130 which, in response to the storage unit 120 being filled with a predefined amount (in time) of broadcast data, generates a file in which broadcast data is stored in time order by deleting least recent broadcast data in the storage unit 120 while storing subsequent broadcast data to most recent broadcast data in the storage unit in a spare storage space next to the most recent broadcast data.

## Description

Apparatuses and methods consistent with exemplary embodiments relate to providing an image processing apparatus and an image processing method thereof, and more particularly, to providing an image processing apparatus having a recording function and an image processing method of the image processing apparatus.

Recent developments in digital broadcasting technology have brought personal video recorders (PVRs), which are capable of recording and reproducing digital broadcast programs.

PVRs, unlike video cassette recorders (VCRs), are digital recorders that record data onto, and reproduce data from, a hard disk. PVRs can record broadcast programs with the aid of a hard disk drive installed in set-top boxes or TVs, without a requirement of VCRs.

The advent of PVRs has made time shifting easier. Time shifting is the recording of a broadcast program currently being broadcasted or viewed by a user to be viewed at a time more convenient to the user.

In the case of a circular buffer, which is used to provide a time shift feature, new broadcast data is written over existing broadcast data when the circular buffer is completely filled with broadcast data.

In this case, if a regular recording mode is switched on during the recording of a broadcast program in connection with a time shift function, a file in which broadcast data is not arranged in time order may be generated, and may thus become difficult to be edited (for example, partitioned or deleted).

Therefore, there is a need for methods to generate a file in which broadcast data is arranged in time order in connection with a time shift function.

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide an image processing apparatus which provides a time shift function that can generate a file in which broadcast data is stored in time order and an image processing method of the image processing apparatus.

According to an aspect of the invention, there is provided an image processing apparatus including: a reception unit which receives broadcast data; a storage unit which, in response to a time shift function being turned on, sequentially stores broadcast data received via the reception unit; and a control unit which, in response to the storage unit being filled with a predefined amount (in time) of broadcast data, generates a file in which broadcast data is stored in time order by deleting least recent broadcast data in the storage unit while storing subsequent broadcast data to most recent broadcast data in the storage unit in a spare storage space of the storage unit when a main storage space is filled with a predetermined amount of broadcast data.

The control unit may delete as much broadcast data as the broadcast data stored in the spare storage space from the storage unit.

The control unit may use an operating system which operates a file system that generates the file by arranging one or more physical addresses at which broadcast data is actually stored logically in time order.

The image processing apparatus may also include: an input unit which receives a 'read' command for a predetermined file stored in the storage unit; a signal processing unit which processes data that is read out from the storage unit in connection with the 'read' command; and a display unit which outputs the processed data, wherein the control unit reads data out from the storage unit based on one or more physical addresses according to a logical arrangement order defined for the predetermined file by the file system, and provides the read-out data to the signal processing unit.

In response to the time shift function being turned off and a regular recording function being turned on, the control unit may continue to store subsequent broadcast data to most recent broadcast data in the file.

The control unit may convert a file generated by the time shift function into a recorded file, the recorded file being a file that is playable and editable.

The image processing apparatus may also include: an input unit which receives an 'edit' command for the recorded file; and a display unit which, in response to an 'edit' command being received for the recorded file, displays an 'edit' screen for the recorded file, wherein, in response to a user selecting a section of the recorded file to be edited from the 'edit' screen, the control unit deletes, copies, or moves data corresponding to the selected file section by accessing one or more physical addresses at which the data is stored according to a logical arrangement order defined for the recorded file.

According to another aspect of the invention, there is provided an image processing method of an image processing apparatus, the image processing method including: receiving broadcast data; in response to a time shift function being turned on, sequentially storing the received broadcast data; and in response to a predefined amount (in time) of broadcast data being stored, generating a file in which broadcast data is stored in time order by deleting least recently stored broadcast data while storing subsequent broadcast data to most recently stored broadcast data in a spare storage space when a main storage space is filled with a predetermined amount of broadcast data.

The generating may include deleting as much broadcast data as the broadcast data stored in the spare storage space.

The generating may include using an operating system which operates a file system that generates the file by arranging one or more physical addresses at which broadcast data is actually stored logically in time order.

The image processing method may also include: receiving a 'read' command for a predetermined file stored in the storage unit; and reading out data based on one or more physical addresses according to a logical arrangement order defined for the predetermined file by the file system, and displaying the read-out data.

The image processing method may also include: in response to the time shift function being turned off and a regular recording function being turned on, continuing to store subsequent broadcast data to most recent broadcast data in the file.

The image processing method may also include converting a file generated by the time shift function into a recorded file, wherein the recorded file is a file that is playable and editable.

The image processing method may also include: in response to an 'edit' command being received for the recorded file, displaying an 'edit' screen for the recorded file; and in response to a user selecting a section of the recorded file to be edited from the 'edit' screen, deleting, copying, or moving data corresponding to the selected file section by accessing one or more physical addresses at which the data is stored according to a logical arrangement order defined for the recorded file.

The above and/or other aspects will be more apparent by describing certain exemplary embodiments with reference to the accompanying drawings, in which:
FIG. 1 is a block diagram of an image processing apparatus according to an exemplary embodiment;
FIG. 2 is a diagram illustrating the generation of a file in which broadcast data is stored in time order;
FIGS. ₃A to ₃C are diagrams illustrating the storing of broadcast data in response to a time shift function being turned on;
FIG. 4 is a detailed block diagram of an image processing apparatus according to another exemplary embodiment;
FIGS. 5 to 7 are diagrams illustrating the editing of a recorded file according to an exemplary embodiment;
FIG. 8 is a diagram illustrating the editing of a section of a file selected by a user in a file system, according to an exemplary embodiment; and
FIG. 9 is a flowchart illustrating an image processing method according to an exemplary embodiment.

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

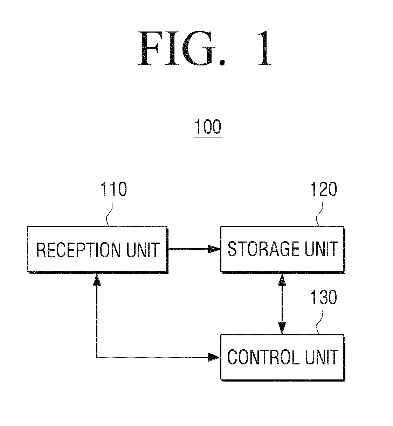

FIG. 1 is a block diagram of an image processing apparatus according to an exemplary embodiment. Referring to FIG. 1, an image processing apparatus 100 includes a reception unit 110, a storage unit 120, and a control unit 130.

The reception unit 110 may receive broadcast data from an external source. For example, the reception unit 110ay select one of a plurality of broadcast signals that are received either by wired means or wirelessly via a tuner (not shown). In another example, the reception unit 110 may receive a broadcast signal from an external device (such as, for example, an external set-top box) connected thereto via an external input unit (not shown).

The storage unit 120 may store broadcast data. More specifically, in response to a time shift function or a regular recording function being turned on, the storage unit 120 may sequentially store broadcast data being received via the reception unit 110.

The time shift function is a function that allows a user to view broadcast data later at any time convenient to the user. The time shift function involves temporarily recording a certain amount (in time) of broadcast data so that the recorded broadcast data can be provided later.

For example, when the time shift function is on, a current broadcast signal may be automatically stored in the storage unit 120 as a digital signal and, at the same time, may be played on a screen. In this example, in response to a 'stop' button and then a 'play' button being pressed, the playback of the stored broadcast signal may resume where it was stopped. The time shift function allows a user to view a current broadcast program at a later time, to play a broadcast program in slow motion, and to jump past parts of a broadcast program to any desired part of the broadcast program.

The time shift function may be a function for temporarily recording an amount (in time) of broadcast data to provide time shifting, and may thus be distinguished from a regular recording function, which is a function for semi-permanently storing broadcast data.

Therefore, in the case of storing broadcast data using the time shift function, a predefined amount (in time) of broadcast data may be stored in the storage space in the storage unit 120.

For example, the storage unit 120 may be implemented as a hard disk drive (HDD) or a nonvolatile memory such as a flash memory, an electrically erasable and programmable read-only memory (EEPROM), or the like.

The control unit 130 may control the general operation of the image processing apparatus 100 in accordance with a user command.

In response to the time shift function or the regular recording function being turned on, the control unit 130 may control broadcast data being received from the reception unit 110 to be sequentially stored in the storage unit 120.

More specifically, in a case in which the time shift function continues to the extent that the storage unit 120 is filled with a predefined amount (in time) of broadcast data, the least recent broadcast data in the storage unit 120 may be deleted while storing subsequent broadcast data to the most recent broadcast data in the storage unit 120 in a spare storage space in the storage unit 120 when a main storage space is filled with a predetermined amount of broadcast data. In this manner, it is possible to generate a file in which broadcast data is stored in time order.

When storing new broadcast data in the storage unit 120 after the storage unit 120 is filled with the predefined amount (in time) of broadcast data, the control unit 130 may delete as much broadcast data as the new broadcast data from the storage unit 120.

The control unit 130 may use an operating system that operates a file system which generates a file in which broadcast data is stored in time order by arranging one or more physical addresses, which are the actual addresses in the storage unit 120, logically in time order.

The term 'file system' may indicate a tool for efficiently utilizing the storage space in the storage unit 120, but is not limited thereto. The file system may allocate one or more physical addresses to the storage unit 120 in units of clusters or blocks, and may store and delete data in units of the clusters or blocks using the physical addresses. The term 'operating system' may indicate a system for driving applications and the file system.

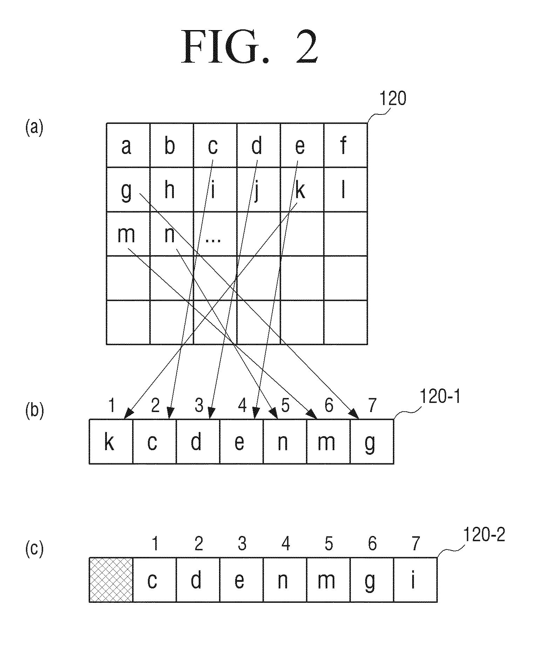

The operation of the control unit 130 is further described with reference to FIG. 2.

FIG. 2 illustrates the operation of the control unit 130, which generates a file in which broadcast data is stored in time order. For example, assume that the storage unit 120 includes a 6×5 array of blocks, and that physical addresses a, b, c, d, e, f, g, ..., are sequentially allocated to the blocks as illustrated in FIG. 2(a).

In response to the time shift function being turned on by a user command, the control unit 130 may sequentially store broadcast data in each of the blocks until a corresponding block is filled with a predefined amount (in time) of broadcast data. The blocks may be provided in the storage unit 120 for providing the time shift function.

The control unit 130 may arrange the physical addresses of one or more blocks in which broadcast data is stored logically in order of the receipt of the broadcast data. That is, the control unit 130 may generate logical addresses for the blocks in which broadcast data is stored in order of the receipt of the broadcast, and may map the logical addresses to the physical addresses of the blocks in which the broadcast data is stored. As a result, it is possible to generate a file in which data is arranged logically in time order.

For example, referring to FIGS. 2(a) and 2(b), in a case in which broadcast data is stored so that blocks with the physical addressees k, c, d, e, n, m, and g are sequentially filled, logical address 1 may be allocated to the block with the physical address k in which least recent broadcast data is stored, and logical address 2 may be allocated to the block with the physical address c in which second least recent broadcast data is stored. In this manner, logical addresses 3, 4, 5, 6, and 7 may be allocated to the blocks with the physical addresses d, e, n, m, and g, respectively.

When the time shift function continues to the extent that the storage unit 120 is filled with a predefined amount (in time) of broadcast data, the control unit 130 may store subsequent broadcast data to the most recent broadcast data in the storage unit 120 in the spare storage space in the storage unit 120, and may delete the least recent broadcast data in the storage unit 120. The amount (in time) of least recent broadcast deleted from the storage unit 120 may be the same as the amount (in time) of broadcast data stored in the storage unit 120 after the storage unit 120 is filled with the predefined amount (in time) of broadcast data.

Thereafter, the control unit 130 may update the logical addresses of one or more blocks currently storing broadcast data to arrange the corresponding blocks logically in time order. Accordingly, it is possible to generate a file in which broadcast data is stored in time order even after the storage unit 120 is already filled with the predefined amount (in time) of broadcast data.

More specifically, referring to FIG. 2(c), if the time shift function continues to the extent that the storage unit 120 is filled with the predefined amount (in time) of broadcast data, the control unit 130 may store subsequent broadcast data in a block with the physical address i, and may delete as much broadcast data from the block with the physical address k.

Thereafter, the control unit 130 may update the logical addresses of the blocks with the physical addresses c, d, e, n, m, and g to 1, 2, 3, 4, 5, and 6, respectively. Thereafter, the control unit 130 may allocate logical address 7 to the block with the physical address i. In this manner, it is possible to generate a file in which broadcast data is arranged logically in time order.

In the example illustrated in FIGS. 2(a) to 2(c), the storage unit 120 may include a 6×5 array of blocks, but there is no restriction to the number of blocks that may be included in the storage unit 120.

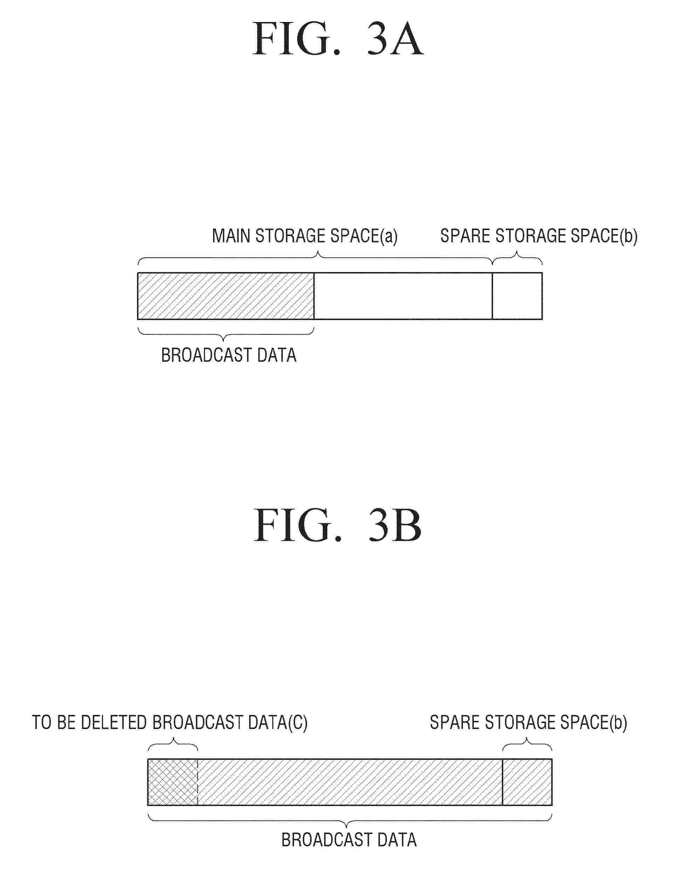

FIGS. 3A to 3C illustrate broadcast data that may be stored in the storage unit 120 in response to the time shift function being turned on. Referring to FIGS. 3A to 3C, main storage space (a) may be a storage space for storing a predefined amount (in time) of broadcast data, spare storage space (b) may be a storage space for storing broadcast data after main storage space (a) is filled with the predefined amount (in time) of broadcast data, to-be-deleted data (c) may be broadcast data to be deleted due to broadcast data stored in spare storage space (b) after main storage space (a) is filled with the predefined amount (in time) of broadcast data.

A method of storing broadcast data in response to the time shift function being turned on is further described with reference to FIGS. 3A to 3C.

Referring to FIG. 3A, in response to the time shift function being turned on by a user command, broadcast data may be sequentially stored in main storage space (a) until main storage space (a) is filled with a predefined amount (in time) of broadcast data. Thereafter, as described above, the physical addresses of the blocks in which broadcast data is stored may be arranged logically in order of the receipt of the broadcast data.

When main storage space (a) is filled with the predefined amount (in time) of broadcast data, subsequent broadcast data may be stored in spare storage space (b), and the least recent data in main storage space (a), i.e., to-be-deleted data (c), may be deleted. Thereafter, as described above, to arrange the physical addresses of the blocks currently storing broadcast data logically in time order, the logical addresses of the corresponding blocks may be updated.

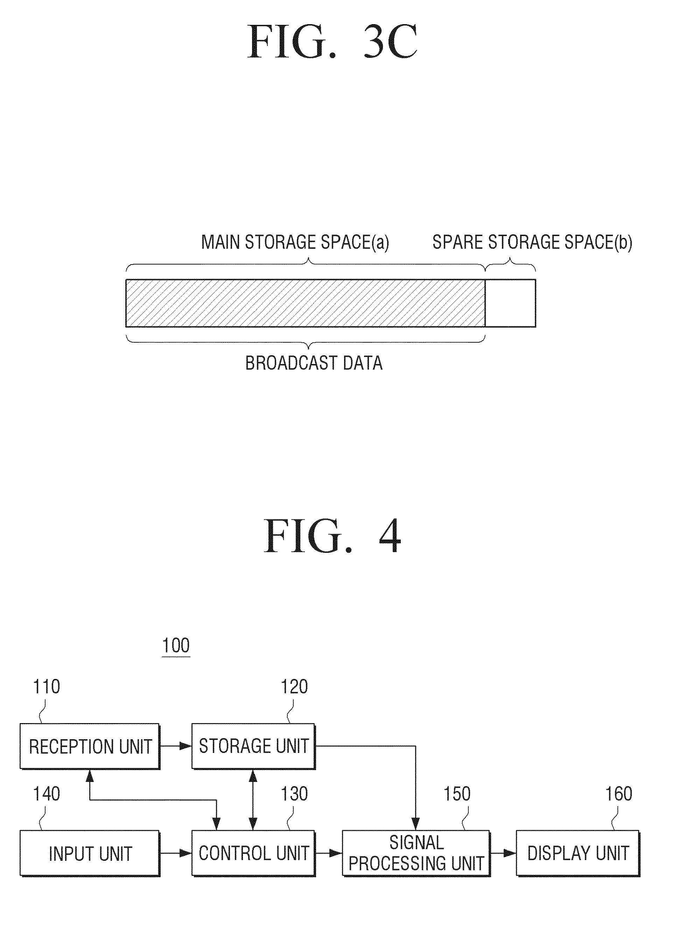

Accordingly, referring to FIG. 3C, a file in which broadcast data is stored in time order may be generated, and as much of spare storage space (b) as to-be-deleted broadcast data (c) may remain empty.

FIG. 4 is a detailed block diagram of an image processing apparatus according to another exemplary embodiment. Referring to FIG. 4, an image processing apparatus 100 includes a reception unit 110, a storage unit 120, a control unit 130, an input unit 140, a signal processing unit 150, and a display unit 160. In FIGS. 1 and 4, like reference numeral indicate like elements, and thus, detailed descriptions thereof will be omitted.

Referring to FIG. 4, the reception unit 110 may receive broadcast data from an external source. For example, the reception unit 110 may select one of a plurality of broadcast signals that are received either by wired means or wirelessly via a tuner (not shown). In another example, the reception unit 110 may receive a broadcast signal from an external device (such as, for example, an external set-top box) connected thereto via an external input unit (not shown).

The storage unit 120 may store broadcast data. More specifically, in response to the time shift function or a regular recording function being turned on, the storage unit 120 may sequentially store broadcast data being received via the reception unit 110. In response to the time shift function being turned on, the storage unit 120 may continue to store broadcast data until the storage unit 120 is filled with a predefined amount (in time) of broadcast data.

The storage unit 120 may be implemented as an HDD or a nonvolatile memory such as a flash memory, an EEPROM, or the like.

The input unit 140 may transmit a user command received via an input tool such as, for example, a remote control, an input panel, or the like to the control unit 130.

For example, the input unit 140 may receive a user command to record a predefined amount (in time) of broadcast data to provide the time shift function, a user command to convert a time-shift-recorded file, which is a recorded file obtained using the time shift function, into a regular recorded file, a user command to play or edit a time-shift-recorded file, or the like.

The input unit 140 may also include a touch screen or a keypad equipped with various function keys, number keys, special function keys, symbol keys, and the like.

The signal processing unit 150 may receive broadcast data from the reception unit 110 or the storage unit 120, and may perform signal processing such as, for example, decoding or scaling, on the received broadcast data.

For example, in response to broadcast being read out from the storage unit 120 in response to a 'read' command from a user, the signal processing unit 150 may divide the read-out broadcast data into video data, audio data, and additional data, and may perform signal processing on the video data and the audio data. That is, the signal processing unit 150 may perform signal processing such as, for example, video decoding, video format analysis, or video scaling, on the video data such that the video data may be converted to a format compatible with the display unit 160 and may thus be output by the display unit 160. The signal processing unit 150 may perform signal processing such as, for example, audio decoding, on the audio data such that the audio data may be converted to a format compatible with an audio output unit (not shown) and may thus be output by the audio output unit.

The signal processing unit 150 may extract the additional data from the received broadcast data and may transmit the additional data to the control unit 130. The extracted data may include an electronic program guide (EPG) and the like.

The display unit 160 may display the video data processed by the signal processing unit 150 on a screen. In response to the receipt of a user command to edit a recorded file, the display unit 160 may display an 'edit' screen for editing the recorded file.

The display unit 160 may include a panel driving module (not shown), a display panel module (not shown), a backlight driving unit (not shown), and a backlight emission unit (not shown).

The audio data processed by the signal processing unit 150 may be transmitted to and output via the audio output unit such as, for example, a speaker.

The control unit 130 may control the general operation of the image processing apparatus 100 in accordance with a user command.

The control unit 130 may store a predefined amount (in time) of broadcast data in connection with the time shift function, and may logically arrange one or more physical addresses at which the broadcast data is actually stored in time order, thereby generating a file in which the broadcast data is stored in time order.

In response to a user command to read a file from the storage unit 120 being received from the input unit 140, the control unit 130 may sequentially read broadcast data from one or more physical addresses in the storage unit 120 according to the logical arrangement order defined for the file by a file system.

That is, the control unit 130 may identify the logical addresses of one or more blocks storing the broadcast data of the file, and may read the corresponding broadcast data from physical addresses respectively corresponding to the identified logical addresses in time order.

For example, referring to FIG. 2(c), in a case in which logical addresses 1, 2, 3, 4,5, 6, and 7 are mapped to physical addresses c, d, e, n, m, g, and i, respectively, the control unit 130 may sequentially read broadcast data from blocks with physical addresses c, d, e, n, m, g, and i.

In response to the time shift function being turned off and the regular recording function being turned on, the control unit 130 may continue to store subsequent broadcast data to most recently time-shift-recorded broadcast data in the storage unit 120.

For example, if the time shift function is turned off and the regular recording function is turned on when broadcast data is stored in blocks with physical addresses c, d, e, n, m, g, and i, as illustrated in FIG. 2(c), and then the regular recording function is turned on, the control unit 130 may continue to store broadcast data in one or more empty blocks in the storage unit 120, i.e., blocks with physical addresses f, a, b, ..., and may allocate logical addresses 8, 9, 10, ..., to blocks with physical addresses f, a, b, ..., respectively.

In response to the time shift function being turned off and the regular recording function being turned on, the control unit 130 may continue to store broadcast data in the storage unit 120 so that the broadcast data may follow a recorded file obtained using the time shift function. The control unit 130 may sequentially read broadcast data from one or more physical addresses according to a logical arrangement order, and may thus provide recorded broadcast data to the signal processing unit 150 in time order.

The control unit 130 may convert a time-shift-recorded file into a regular recorded file in accordance with a user command. A regular recorded file may be a file that is playable and editable.

A time-shift-recorded file may include a predefined amount (in time) of broadcast that is temporarily recorded by the time shift function, and may thus be deleted in response to the image processing apparatus 100 being turned off. Regular recording, unlike time-shift recording, may include storing broadcast data semi-permanently until the issuance of a 'delete' command.

In response to the receipt of a user command to convert a time-shift-recorded file into a regular recorded file, the control unit 130 may convert file information on the time-shift-recorded file so that the time-shift-recorded file may be recognized as a regular recorded file. In this manner, a user may play or edit a time-shift-recorded file by converting the time-shift-recorded file into a regular recorded file.

For example, an edit screen may be displayed on the display unit 160 in accordance with a user command. In this example, in response to a user selecting a section of a file to be edited, the control unit 130 may delete, copy, or move broadcast data corresponding to the selected file section by accessing one or more physical addresses at which the broadcast data is stored according to a logical arrangement order.

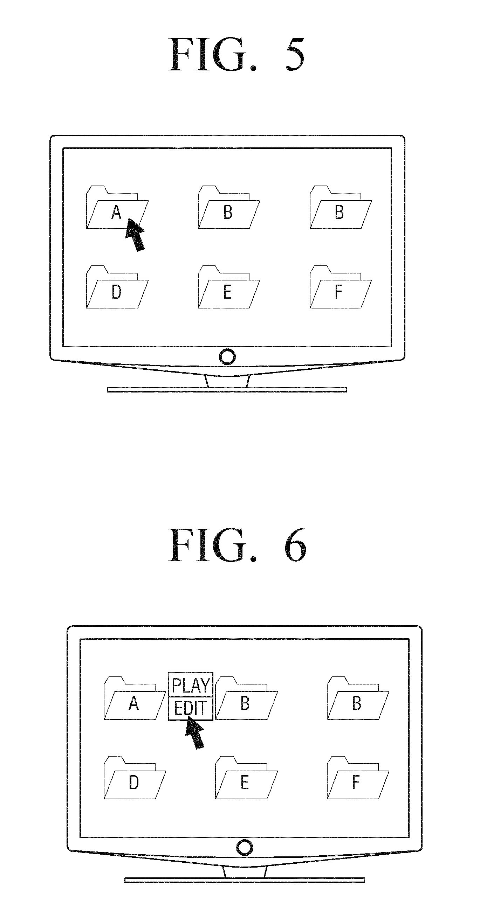

The operation of the control unit 130 is further described with reference to FIGS. 5 to 7.

FIGS. 5 to 7 are diagrams illustrating the editing of a recorded file according to an exemplary embodiment.

A time-shift-recorded file may be temporary data that is deleted in response to the image processing apparatus 100 being turned off, while a regular recorded file, which is a recorded file generated by the regular recording function, may be semi-permanent data that is not deleted in response to the image processing apparatus 100 being turned off. The image processing apparatus 100 may convert a time-shift-recorded file into a regular recorded file in accordance with a selection made by the user so that the file may be used semi-permanently.

For example, in a case in which the regular recording function is selected during the time shift function, the control unit 130 may generate a regular recorded file including time-shift-recorded broadcast data.

In another example, in a case in which the time shift function is terminated, a time-shift-recorded file may be stored in the image processing apparatus 100. In this example, in response to the time-shift-recorded file being selected, the file system of the control unit 130 may change file information of the time-shift-recorded file such that the time-shift-recorded file may be recognized as a regular recorded file. In this manner, a user may play or edit a time-shift-recorded file by converting the time-shift-recorded file into a regular recorded file.

FIG. 5 illustrates an example of a user interface (UI) screen for identifying information on one or more recorded files. Referring to FIG. 5, in response to a 'check file' command being issued by a user, a list of various recorded files present in the image processing apparatus 100 may be displayed. The user may select one of the recorded files by touching the UI screen or moving a cursor using, for example, a remote control.

FIG. 6 illustrates an example of a UI screen that may be displayed when one of the recorded files displayed on the UI screen illustrated in FIG. 5 is selected. Referring to FIG. 6, in response to a recorded file being selected from the list of recorded files displayed on the UI screen of FIG. 5, one or more function menus that may be provided for the selected recorded file may be displayed.

For example, referring to FIG. 6, a 'play' menu and an 'edit' menu may be displayed, and a user may choose one of the 'play' menu and the 'edit' menu by moving a cursor. The 'play' menu and the 'edit' menu may be displayed near the selected recorded file, but there is no restriction to how to display the 'play' menu and the 'edit' menu. That is, a new display screen showing the 'play' menu and the 'edit' menu may be displayed as a replacement of the UI screen illustrated in FIG. 6.

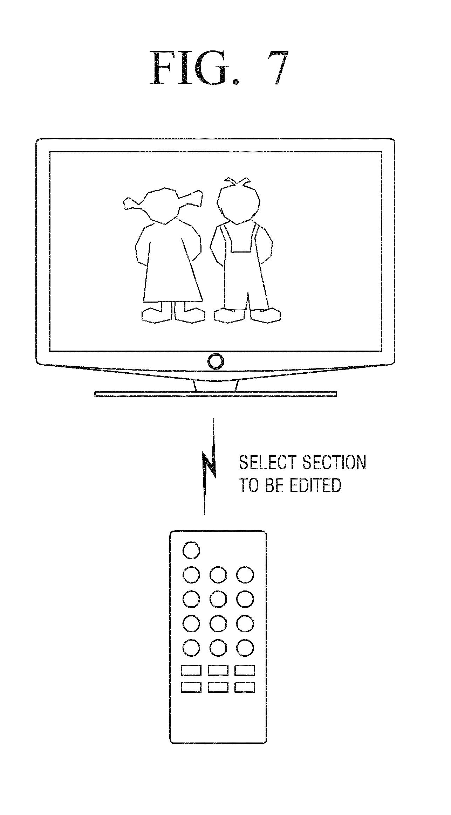

FIG. 7 illustrates an example of the switching of display screens in response to a predetermined function menu being selected for a selected recorded file. Referring to FIG. 7, in response to the 'edit' menu being selected from the UI screen of FIG. 6, an 'edit' screen for editing the selected recorded file may be displayed on the display unit 160.

In this case, a user may select, from the 'edit' screen, a section of the selected recorded file to be edited by using a remote control. For example, the user may select a section of the selected recorded file to be edited by choosing beginning and end frames of a desired section of the selected recorded file from the 'edit' screen or entering beginning time information and end time information (for example, 5:12 and 22:24) of the desired file section.

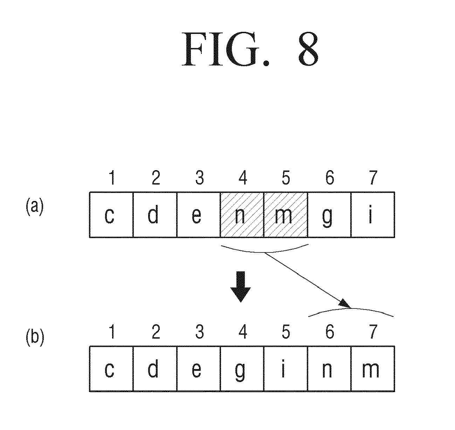

In response to a section to be edited being selected from the selected recorded file, broadcast data corresponding to the selected file section may be deleted, copied, or moved by accessing one or more physical addresses at which the broadcast data is stored according to a logical arrangement order defined for the selected recorded file. The editing of a broadcast data file is further described with reference to FIG. 8.

FIG. 8 illustrates an example of the editing of a broadcast data file by a file system in response to a section to be edited being selected from the broadcast data file by a user. Referring to FIG. 8, in a case in which a user selects a section of a file to move the selected file section to the end of the file, a file system may determine one or more logical addresses corresponding to the selected file section based on the logical arrangement of broadcast data in the file. If the selected file section corresponds to, for example, blocks 4 and 5 of the file, the file system may move blocks 4 and 5 to behind block 7. Accordingly, the selected file may be edited so that the blocks therein may be rearranged in order of c, d, e, g, i, n, and m. In response to a 'play' command being issued for the edited file, the file system may control broadcast data to be sequentially read out from physical addresses c, d, e, g, i, n, and m in the storage unit 120 and may control the read-out broadcast data to be transmitted to the signal processing unit 150. In this manner, it is possible to easily edit and play a broadcast data file.

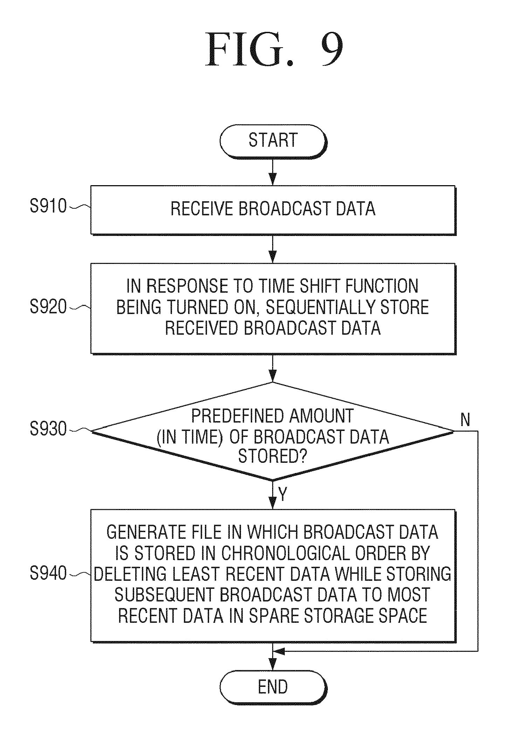

FIG. 9 is a flowchart illustrating an image processing method according to an exemplary embodiment.

Referring to FIG. 9, in operation S910, broadcast data may be received. In operation S920, in response to the time shift function being turned on, the received broadcast data may be sequentially stored.

In operation S930, a determination may be made as to whether a predefined amount (in time) of broadcast data has been stored as a result of operation S920.

In operation S940, in response to the predefined amount (in time) of broadcast data being stored (operation S930:Y), a file in which broadcast data is stored in time order may be generated by deleting least recently stored broadcast data while storing subsequent broadcast data to most recently stored broadcast data in a spare storage space next to the most recently stored broadcast data.

In operation S₉₄₀, the amount (in time) of broadcast data deleted may be the same as the amount (in time) of broadcast data stored in the spare storage space.

Operation S₉₄₀ may be performed by an operating system which operates a file system that generates a file by arranging one or more physical addresses in a memory at which broadcast data is actually stored logically in time order.

In response to a 'read' command for a file being received, broadcast data may be sequentially read out from one or more physical addresses according to a logical arrangement order, and the read-out broadcast data may be displayed.

In a case in which the time shift function is turned off and the regular recording function is turned on, subsequent broadcast data to most recently time-shift-recorded broadcast data may be stored by the regular recording function.

A time-shift-recorded file may be converted into a regular recorded file in accordance with a user command. The regular recorded file may be a file that is playable and editable.

In response to an 'edit' command for a recorded file being received, an 'edit' screen for the recorded file may be displayed. In this case, if a user selects a section of the file to be edited from the 'edit' screen, broadcast data corresponding to the selected file section may be deleted, copied, or moved by accessing one or more physical addressees at which the broadcast data is stored according to a logical arrangement order.

The image processing method illustrated in FIG. 9 may be realized by the image processing apparatus 100 or other image processing apparatuses that do not necessarily include all the elements of the image processing apparatus 100.

The processes, functions, methods, and/or software described herein may be recorded, stored, or fixed in one or more computer-readable storage media that includes program instructions to be implemented by a computer to cause a processor to execute or perform the program instructions. The media may also include, alone or in combination with the program instructions, data files, data structures, and the like. The media and program instructions may be those specially designed and constructed, or they may be of the kind well-known and available to those having skill in the computer software arts. Examples of computer-readable storage media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules that are recorded, stored, or fixed in one or more computer-readable storage media, in order to perform the operations and methods described above, or vice versa. In addition, a computer-readable storage medium may be distributed among computer systems connected through a network and computer-readable codes or program instructions may be stored and executed in a decentralized manner.

As described above, it is possible to generate a file in which broadcast data is stored in time order by using a time shift function. Therefore, it is possible to facilitate the editing of broadcast data stored in connection with the time shift function.

## Claims

1. An image processing apparatus comprising:
a reception unit which receives broadcast data;
a storage unit which, in response to a time shift function being turned on, sequentially stores broadcast data received via the reception unit; and
a control unit which, in response to the storage unit being filled with a predefined amount (in time) of broadcast data, generates a file in which the broadcast data is stored in a time order by deleting least recent broadcast data in the storage unit while storing subsequent broadcast data to most recent broadcast data in the storage unit in a spare storage space of the storage unit when a main storage space is filled with the predefined amount of broadcast data.

2. The image processing apparatus of claim 1, wherein the control unit deletes from the storage unit,an amount of broadcast data that is equal to the broadcast data stored in the spare storage space.

3. The image processing apparatus of claim 1 or 2, wherein the control unit comprises an operating system which operates a file system which generates the file by arranging one or more physical addresses at which broadcast data is actually stored logically in time order.

4. The image processing apparatus of claim 3, further comprising:
an input unit which receives a 'read' command for a predetermined file stored in the storage unit;
a signal processing unit which processes data which is read out from the storage unit based on the 'read' command; and
a display unit which outputs the processed data,
wherein the control unit reads data out from the storage unit based on one or more physical addresses according to a logical arrangement order defined for the predetermined file by the file system, and provides the read-out data to the signal processing unit.

5. The image processing apparatus of claim 3 or 4, wherein, in response to the time shift function being turned off and a regular recording function being turned on, the control unit continues to store subsequent broadcast data to most recent broadcast data in the file.

6. The image processing apparatus of any one of claims 3 to 5, wherein the control unit converts the file generated by the time shift function into a recorded file, the recorded file being a file that is playable and editable.

7. The image processing apparatus of claim 6, further comprising:
an input unit which receives an 'edit' command for the recorded file; and
a display unit which, in response to an 'edit' command being received for the recorded file, displays an 'edit' screen for the recorded file,
wherein, in response to a user selecting a section of the recorded file to be edited from the 'edit' screen, the control unit deletes, copies, or moves data corresponding to the selected file section by accessing one or more physical addresses at which the data is stored according to a logical arrangement order defined for the recorded file.

8. An image processing method of an image processing apparatus, the image processing method comprising:
receiving broadcast data;
in response to a time shift function being turned on, sequentially storing the received broadcast data; and
in response to a predefined amount (in time) of broadcast data being stored, generating a file in which broadcast data is stored in time order by deleting least recently stored broadcast data while storing subsequent broadcast data to most recently stored broadcast data in a spare storage space when a main storage space is filled with the predefined amount of broadcast data.

9. The image processing method of claim 8, wherein the generating comprises deleting an amount of broadcast data which is equal to the broadcast data stored in the spare storage space.

10. The image processing method of claim 8 or 9, wherein the generating comprises using an operating system which operates a file system that generates the file by arranging one or more physical addresses at which broadcast data is actually stored logically in time order.

11. The image processing method of claim 10, further comprising:
receiving a 'read' command for a predetermined file stored in the storage unit; and
reading out data based on one or more physical addresses according to a logical arrangement order defined for the predetermined file by the file system, and displaying the read-out data.

12. The image processing method of claim 10 or 11, further comprising:
in response to the time shift function being turned off and a regular recording function being turned on, continuing to store subsequent broadcast data to most recent broadcast data in the file.

13. The image processing method of any one of claims 10 to 12, further comprising:
converting a file generated by the time shift function into a recorded file,
wherein the recorded file is a file that is playable and editable.

14. The image processing method of claim 13, further comprising:
in response to an 'edit' command being received for the recorded file, displaying an 'edit' screen for the recorded file; and
in response to a user selecting a section of the recorded file to be edited from the 'edit' screen, deleting, copying, or moving data corresponding to the selected file section by accessing one or more physical addresses at which the data is stored according to a logical arrangement order defined for the recorded file.
